# EUROPEAN PATENT APPLICATION

(11) **EP 4 561 255 A1**
(43) Date of publication of application: **28.05.2025**
(21) Application number: 23212329.9
(22) Date of filing: 27.11.2023
(51) Int. Cl.: H04W 84/10, H04L 67/12, H04W 28/02, H04L 47/10

(54) **A METHOD FOR OPERATING AN EDGE NODE IN AN INDUSTRIAL PRODUCTION CELL**

(71) Applicant: Siemens Aktiengesellschaft, 80333 München (DE)
(72) Inventor: Richerzhagen, Björn, 85055 Ingolstadt (DE); Zeiger, Florian, 85635 Höhenkirchen-Siegertsbrunn (DE)
(74) Representative: Siemens Patent Attorneys

(57) **Abstract**

The embodiments propose means to establish communication links between application end points in production cells and on user equipment associated with a wireless 5g industrial campus network or later generations of wireless networks. As a consequence, time-deterministic and/or time-sensitive quality-of service may be supported on user equipment connected by 5G systems and may be offered inside production cells. The embodiments propose placing virtualized CU and DU software components to industrial edge-cloud systems or defining an industrial radio unit or RU component that features a local data break out for production cell data traffic complying with time-deterministic and/or time-sensitive quality-of service requirements of the production cell data traffic.

## Description

### TECHNICAL FIELD

The disclosed embodiments generally relate to the field of industrial communication technology and more specifically to embodiments for connecting application endpoints being associated with a core network on an aggregation layer with application endpoints being associated with a cell network of an industrial production cell while complying with quality-of service requirements of the cell network.

### BACKGROUND

Wireless communication technologies leverage future use cases in so-called Industry 4.0 and Industrial Internet of Things (IIoT) scenarios by offering higher levels of mobility and flexibility. Implementing wireless communication technologies in an industrial environment requires an industrial-grade resource management. Such resource management may specifically refer to a defined access and/or industrial quality of service (QoS) requirements on a wireless communication link.

A key challenge for current and future wireless systems such as fifth generation mobile networks or 5G systems, WiFi6 systems and future generations of 6G (sixth generation) systems is to adequately support industrial service quality from an end-to-end perspective. In this context, end-to-end may refer to a connection from a first application endpoint to a second application endpoint. Application endpoints may be assigned to industrial applications running on industrial computers systems, computers in industrial devices or lightweight industrial controllers such as IO controllers, or user equipment (UE) in general.

A particular challenge of connecting endpoints within an industrial wireless network system is a case where the two application endpoints to be connected are located in different zones of the industrial wireless network system. Industrial networks usually utilize such different zones, e.g. for isolating or separating services and/or functionality between such network zones.

Industrial networks may commonly provide an aggregation layer in order to cover large radio coverage areas, such as a factory perimeter with different production halls, logistics area, etc. In such configurations, the radio range of devices or user equipment (UE) communicatively coupled to the aggregation layer of the factory-wide campus may overlap with a network zone which is actually to be separated from the campus network. A prominent industrial use case for a network zone which is to be separated from the campus network is a production cell network for connecting industrial devices such as Programmable Logic Controllers or PLC, Input/Output Devices or IO-Devices, controllers, industrial PCs or IPC, etc. The production cell network may be designed to require and to support rigid QoS requirements such as priorities, bounded delays, bandwidth, etc.

In contrast to the production cell network, the network at the aggregation layer may be larger, closer to information technology (IT) rather than operation technology (OT). This may particularly imply that the network at the aggregation layer may lack rigid QoS requirements as implemented in the production cell.

Current setups of 5G campus networks are usually part of the aggregation layer in which a 5G core network may reside. In such setups, 5G mobile or stationary devices - commonly referred to as UE or User Equipment - associated with the aggregation layer may also reside in production cells. Future network plans envisage to host industrial applications not only within the cell network but also on such UEs. Accordingly, UEs connected via 5G, or future generations of mobile networks will be required to support quality-of service requirements for data services in order to properly transport data traffic between application communication end points on the UE within the respective production cell.

Accordingly there is a need in the art for connecting application endpoints, at least some of which being associated with a core network on an aggregation layer, within an industrial production cell while complying with quality-of service requirements of a cell network within the industrial production cell.

### SUMMARY AND DESCRIPTION

The present invention relates to a computer-implemented method for operating an edge node to provide local data breakout related to a data service provided by at least one application endpoint in an industrial production cell, the industrial production cell including:
- a first application end point associated with a cell network (CNW) of the industrial production cell (PRC), the cell network (CNW) of the industrial production (PRC) cell being imposed by time-deterministic and/or time-sensitive quality-of service requirements; and;
- a second application end point associated with an aggregation layer (AGL) of an industrial campus network (INW) providing core network services assigned to the aggregation layer (AGL);
the method including the steps of:
- allocating computing resources in the industrial production cell (PRC) to form the edge node (CUT) and assigning at least one radio unit (RU) service to the edge node (CUT);
- operating a user plane function (UPF) by said core network services assigned to the aggregation layer (AGL) and/or by a core network service assigned to the edge node (CUT), the user plane function (UPF) operated for exchanging control data between at least one of said core network services assigned to the aggregation layer (AGL) and the edge node (CUT); and;
- establishing the data service between the first and the second application endpoint consistently within the cell network (CNW), the data service complying with the quality-of service requirements of the cell network (CNW).

In order to connect application endpoints which are associated - or in other words: organizationally assigned - to heterogeneous networks - e.g. the cell network of the industrial production cell on the one hand and the aggregation layer of a campus network on the other hand - the embodiments provides a local data breakout for selectively routing traffic from/to the first application end point to/from the second application end point.

The embodiments propose a mechanism to establish communication links between application end points in production cells and on user equipment. As a consequence, time-deterministic and/or time-sensitive quality-of service is also supported on user equipment connected by 5G systems and may be offered inside production cells.

Data packets being exchanged for operating the data service may be routed to the second application end point instead of routing those data packets to the aggregation layer of the campus network while data packets being not related to the data service may be routed to the aggregation layer. In these ways, the local breakout may provide low latency and reduced network resource consumption for the data services and decreased data traffic load on the aggregation layer and, eventually, on the core network.

The edge node may be set up in one single device. In the alternative, the edge node may be set up or as a plurality of services executed on computing resources and/or devices being communicatively connected by the cell network. The computing resources and/or devices being communicatively connected by the cell network may also be referred to as edge cloud.

An ability to locally access, i.e. breakout, mobile communications data traffic facilitates to preserve the quality-of-service-requirements (QoS) of the cell network and to extend these local QoS requirements to the remotely connected second application end point actually - i.e. organizationally - being associated with the remote aggregation layer. In this way, local data traffic being related to the data service may be kept inside the local cell network of the industrial production cell.

The present embodiments further relate to an industrial unit or industrial unit comprising a processor and a data storage device having stored thereon computer executable program code, which, when executed by the processor, causes the processor to perform the above method.

Further possible embodiments are - by no means exhaustive - the subject of dependent claims.

### DESCRIPTION OF THE DRAWING

The objects as well as further advantages of the present invention will become more apparent and readily appreciated from the following description of the preferred embodiments, taken in conjunction with the accompanying drawing accompanying drawing of which:
- FIG. 1:: is a schematic block diagram representing an industrial communication setup including a wireless campus network along with a cell network for supplying a production cell;
- FIG. 2:: is a schematic block diagram representing an industrial communication setup according to a first embodiment; and;
- FIG. 3:: is a schematic block diagram representing an industrial communication setup according to a second embodiment of the present disclosure.

### DETAILED DESCRIPTION

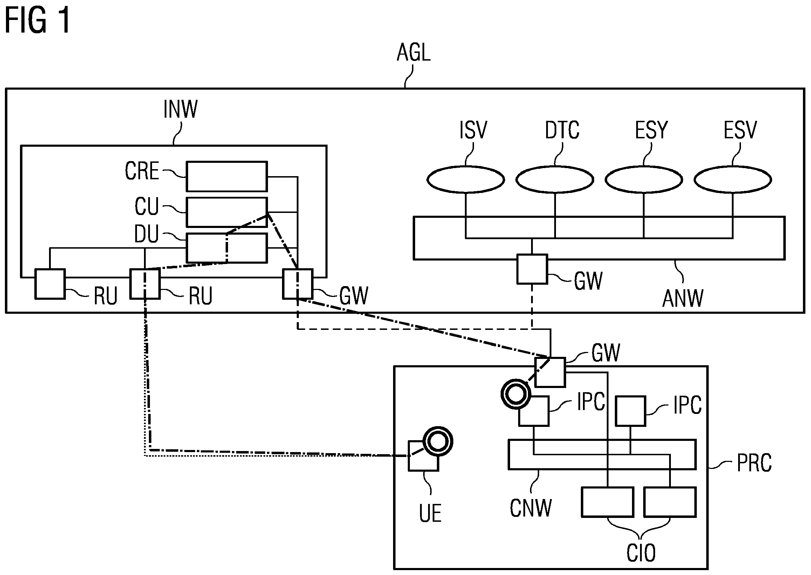

FIG. 1 shows a simplified excerpt from an industrial communication setup including a wireless campus network INW and a cell network CNW for supplying a production cell PRC.

The production cell PRC may serve as an example for an area or network zone in which two heterogeneous wireless communication networks are concurrently accessible. Industrial communication architecture may utilize such production cells PRC for isolating or separating services and/or functionality from other network zones.

The production cell network CNW may connect a multiplicity of nodes in the production cell PRC. Nodes connected in the cell network CNW may include one or more input/output controllers CIO and/or one or more industrial applications IPC which may be executed on a - not shown - processor or micro controller inside - not shown - industrial devices wirelessly connected to the production cell network CNW.

In contrast to the production cell network CNW, an aggregation layer AGL may be larger, closer to IT (information technology) rather than OT (operational technology) operational paradigms and/or may lack the QoS support as implemented in the production cell. The aggregation layer AGL may comprise one or more networks such as an aggregation network ANW and an industrial campus network INW. The aggregation layer AGL, or, more specifically, functional units forming the industrial campus network INW, may make up fronthaul, midhaul and backhaul of an industrial campus network INW comprising known 5G or higher generational network units such as a core unit CRE, one or more centralized units CU, one or more distributed units DU and one or more radio units RU.

The aggregation network ANW may gather - not shown - systems, servers and/or storage units for offering services such as internal services ISV, industrial datacenters DTC, enterprise services ESY such as an enterprise resource planning and/or manufacturing execution system, external services ESV etc. Said services ISV, DTC, ESY, ESV may be accessed frequently or sporadically by services within the production cell PRS.

Dedicated gateways GW may be provided to form a transition interface for data exchange between services hosted by nodes located in different zones for isolating or separating services and/or functionality between each other. More specifically, a respective gateway GW may be situated on respective boarders of the cell network CNW, the industrial campus network INW, and the aggregation network ANW.

As described above, current industrial setups providing a production cell PRC may encounter an overlap of two heterogeneous wireless communication networks within this production cell PRC, namely an overlap of the production cell network CNW and the industrial campus network. Although an overlap in the radio coverage of two heterogeneous radio networks is neither undesirable nor problematic, a special configuration in the industrial communication domain deserves more attention, which is explained in more detail below using an exemplary mobile or stationary device commonly referred to as user equipment UE. This exemplary user equipment UE can of course mean any communicating digital device and the description hereinafter using the exemplary user equipment UE may apply equally to any communicating digital device.

The exemplary user equipment UE is assumed to be associated with the aggregation layer by a wireless connection link to the radio unit RU of the industrial campus network INW while the user equipment UE itself is locally residing in the area of the production cell PRC. The wireless connection of the user device UE with the radio unit RU is symbolized in the drawing by a thin dashed line to indicate that the user device UE may be spatially located in the production cell PRC, but not assigned to the production cell network CNW with regard to its wireless communication connection.

Future network plans envisage to host industrial applications IPC and/or input-/output controllers CIO not only within the cell network CNW as depicted in the drawing, but also on said user equipment UE associated with the aggregation layer AGL. In order to enable two or more industrial applications hosted in heterogeneous network zones to communicate with each other, application end points may be defined forming respective endpoints of data sessions by which two or more industrial applications exchange data with each other.

The drawing shows two exemplary application end points - respectively symbolized by a double circle in the drawing - on the industrial applications IPC and on the UE wherein the first application end point situated on the industrial applications IPC is associated with the cell network CNW of the industrial production cell PRC and the second application end point is associated with the aggregation layer AGL of the industrial campus network INW, the aggregation layer AGL providing core network functionality of the campus network.

The drawing further shows a dash-dotted connection route, which bidirectionally spans from first application end point of the industrial application IPC via the gateway GW assigned to the production cell PRC and via a corresponding gateway GW of the industrial campus network INW. From there the connection route continues to the centralized unit CU via the distributed unit DU and via a radio unit RU to the corresponding application end point of the user equipment UE.

Due to a data service to be established between the first and the second application endpoint, the user equipment UE connected via the wireless 5G network of the industrial campus network INW may be required to support time-deterministic and/or time-sensitive quality-of service requirements or QoS requirements imposed by the cell network CNW in order to properly transport data traffic along the dash-dotted connection route. This is currently not feasible and a main reason for this infeasibility is that a data communication break out at the physical radio unit RU component is currently not realizable or at least not realized in current 5G systems. Breakouts in current 5G Systems may currently only be realized at the central unit CU component or at the 5G core RCE applying a 3GPP protocol termination through a User Plane Function.

Accordingly, a major obstacle to seamlessly connecting two or more industrial applications hosted in heterogeneous network zones is in the QoS requirements for data services. In order to support the QoS requirements in current industrial scenarios between the user equipment UE and application end points in one or more production cells PRC, the 5G system would need to be placed in the production cell PRS or directly connected to production cell PRS.

In the present case as shown in FIG 1 wherein the 5G system of the industrial campus network INW is located at the aggregation layer AGL a seamless compliance with QoS requirements between the user equipment UE and production cell PRC may only be possible, if network components in the aggregation layer AGL would be upgraded to support required industrial protocols such as Profinet and mechanisms such as time sensitive networks or TSN, currently applied in the production cell PRC. This measure is almost impossible using reasonable means.

In summary, current measures for integrating industrial applications in heterogeneous network zones are unsuitable, expensive and/or complex. These measures would either require a separate additional 5G system for each production cell PRC, or an upgrade of the aggregation network ANW in the aggregation layer AGL with industrial devices. Such an upgrade, however, is a purely theoretical option, as the plain information technology (IT) nature of the aggregation network ANW does not allow exchanging or upgrading its components with industrial operation technology (OT) components. Further on, IT specialists lack the specialist knowledge expertise to operate OT components in an IT network.

At present, there is still a need in the art for connecting application endpoints being associated with the core network on an aggregation layer with application endpoints being associated with an industrial production cell, while consistently meeting the quality-of service requirements of the cell network throughout the connection route.

The present embodiments address this need to connect heterogeneous application endpoints by disclosing a method which may be simplified as a data services orchestration aiming for a setup of data services between application end points in the production cell PRC and on one or more user equipment UE.

Such a data service orchestration may be summarized by generic instructions as follows:
- place new or locate suitable distributed unit (DU) functionality for the specific data service;
- place new or locate suitable functionality in the data plane of a centralized unit (CU) functionality for the data service;
- trigger an initialization or use a suitable User Plane Function at the corresponding 5G centralized unit (CU) component; and,
- place the User Plane Function at the corresponding centralized unit (CU) data plane interface.

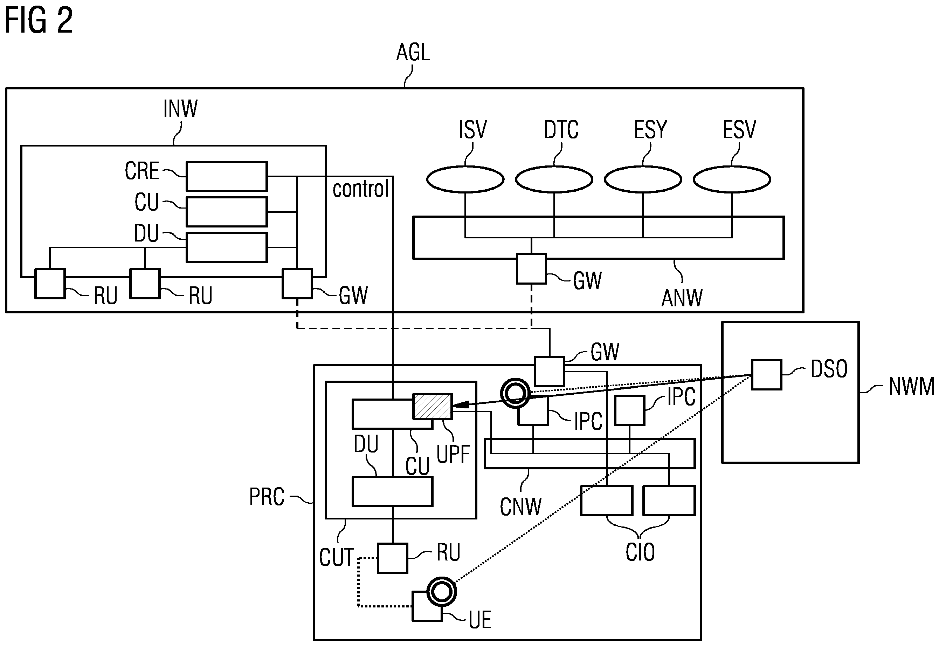

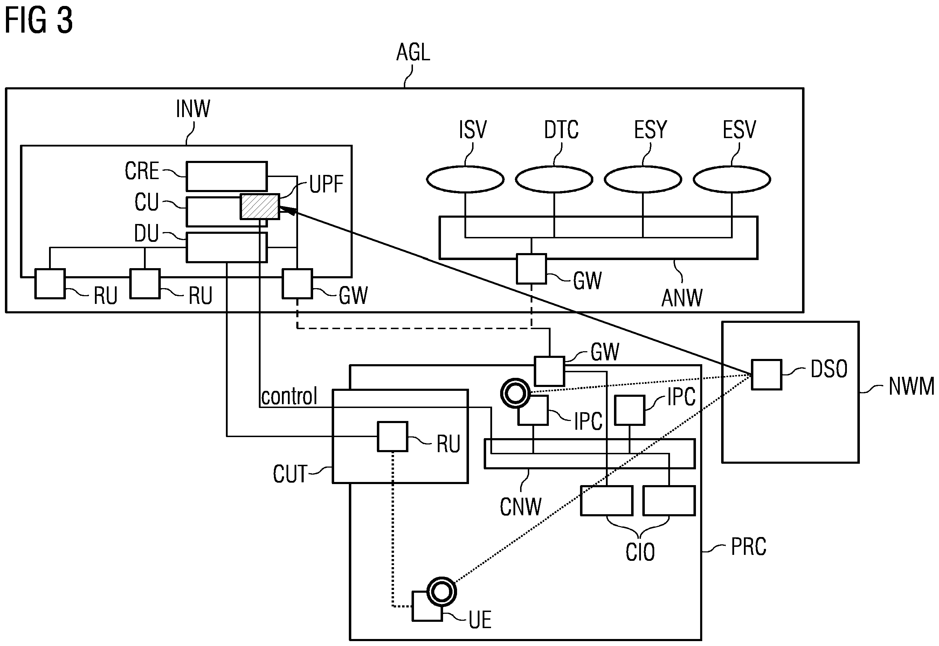

These generic instructions may be realized by a first and/or a second embodiment as described in the following sections. The further description of FIG. 2 and FIG. 3 each relates to functional units of the previous figures. Thereby identical reference symbols in different figures represent identical functional units.

In FIG. 2 a schematic block diagram representing an industrial communication setup according to a first embodiment is shown. In this embodiment an industrial edge cloud - not shown - is assumed to be deployed in the production cell. The industrial edge cloud may be formed by a composite system of industrial devices, industrial applications IPC and/or servers interconnected by the production cell network CNW, whereby this composite system, in a in a manner known in the art, may form an industrial edge cloud system to which of services may be assigned. Services may be assigned in general using a data service orchestration service DSO being hosted in a network management NWM component. The network management NWM component may be responsible for a multiplicity of networks.

The industrial edge cloud according to this embodiment ma include computing resources allocated to host software components for a distributed unit DU and for a data plane of a centralized unit CU. Both, the distributed unit DU and the centralized unit CU are represented in the drawing as a respective block, although the distributed unit DU and centralized unit CU services may be distributed as software components across functional units of the industrial edge cloud within the production cell PRC.

An arrangement of the distributed unit DU services and the centralized unit CU services is symbolized in the drawing as an edge node CUT to which two core network service are assigned, namely the distributed unit DU service and the centralized unit CU service. This edge node CUT may be seen as - compared to the larger 5G core network as operated in the industrial network INW - a smaller 5G core network deployed in the production cell PRC.

A logical connection which may be referred to as a direct communication channel is instituted for exchanging control plane data - see connection with the reference sign »control« in the drawing - between the centralized unit CU service of the edge node CUT and the centralized unit CU as hosted in the aggregation layer AGL. This setup allows a placement of a local data breakout in the production cell PRC.

On an event that an industrial application IPC requests a service with QoS requirements between its application endpoints, the data service orchestration service DSO may aid to identify required QoS parameters and initiate a setup of a corresponding user plane function UPF - shown hatched in the drawing - at the data plane of the centralized unit CU service of the edge node CUT component hosted on the industrial edge cloud in the production cell PRC. Thus, a data service with QoS guarantees may be established between the the first and the second application endpoint inside the production cell PRC. In other words, the first and the second application endpoints are connected within the industrial production cell PRC while complying with quality-of service requirements of the production cell network CNW. This is due to the provision as put forth by this and other embodiments of the present invention to operate at least one core network service - here two core network services, a distributed unit DU service and a centralized unit CU service - assigned to the edge node CUT in the industrial edge cloud being a part of the production cell network CNW and, thereby, being capable of supporting the required operation technology (OT) protocols and mechanisms to ensure the required QoS.

FIG. 3 shows a schematic block diagram representing an industrial communication setup according to a second embodiment of the present disclosure. The second embodiment may be particularly advantageous in setups in which an edge cloud instance is to be avoided or where sufficient resources for an edge cloud instance may be lacking.

Instead, the second embodiment establishes a lightweight core network service within the production cell network CNW by introducing a modified device, namely a correspondingly expanded radio unit RU, in order to gain advantages similar to the first embodiment, namely keeping both application endpoints within the industrial production cell PRC while complying with quality-of service requirements of the production cell network CNW.

According to the second embodiment, a radio unit RU device with extended capabilities is be deployed in the production cell PRC. The extended capabilities of the modified radio unit RU device are again referred to as edge node CUT in FIG. 3. This means that the radio unit RU functionality of the edge node CUT according to the second embodiment may substantially conform with conventional radio units - e.g. such as a radio unit RU associated with the industrial campus network INW - while the remaining computing resources of the modified device, now referred to as edge node CUT according to the second embodiment, may be again in a similar manner as in the first embodiment illustrated in FIG. 2 used to establish lightweight core network services within the edge node CUT according to this second embodiment. The edge node CUT has additional compute and communication capabilities. The radio unit RU being part of the edge node CUT is connected in a conventionally known manner to the distributed unit DU in the aggregation layer AGL. This connection is symbolized in the drawing by a left line drawn between the radio unit RU being part of the edge node CUT and the 5G distributed unit DU in the aggregation layer AGL.

In order to support a further parallel control data transfer - which is symbolized in the drawing by a line drawn to the right of the connection between the radio unit RU being part of the edge node CUT and the distributed unit DU in the aggregation layer AGL and provided by a reference sign »control« - according to this embodiment, the conventionally known data connection link may be chosen to support a higher data transfer capacity, e.g. twice as big as required for handling a conventional data transfer between the 5G distributed unit DU in the aggregation layer AGL and a conventional radio unit RU.

As soon as application end points in the production cell PRC request a service via a user equipment UE, a data service orchestration service DSO - e.g., being hosted by a network management NWM - may aid to identify required QoS parameters and initiate a setup of a corresponding user plane function UPF - shown hatched in the drawing - at the data plane of the centralized unit CU in the aggregation layer AGL.

In addition, a connection from an external interface of the edge node CUT - which is a local data break out to the production cell PRC - to the user plane function UPF may be configured by the left data link between the 5G distributed unit DU in the aggregation layer AGL and the conventional radio unit RU in the edge node CUT. Said external interface of the edge node CUT may be located at the intersection of the control data link running through the edge node CUT and the right edge of the edge node CUT.

As previously mentioned, the left data link between the 5G distributed unit DU in the aggregation layer AGL and the conventional radio unit RU in the edge node CUT may be advantageously more generously dimensioned - e.g. twice as big - as would be required for handling a conventional data transfer between the 5G distributed unit DU in the aggregation layer AGL and a conventional radio unit RU. A remaining 50% capacity may be used for connecting the control connection - which is symbolized in the drawing by the line with the reference sign »control« drawn to the right - to the local data break out at the production cell PRC.

In this second embodiment the industrial edge node CUT is being formed by a radio unit with extended capabilities. The user Plane Function UPF is operated in a core network service assigned to the aggregation layer AGL, here in the centralized unit CU of the aggregation layer AGL. This user plane function UPF is operated for exchanging control data between the control plane centralized unit CU of the aggregation layer AGL and the local data breakout.

This second embodiment is particularly viable, because distributed unit DU and data plane of the centralized unit CU are functionality co-located, which means that no additional networking is done in-between both. This situation is given according to the drawing and is usually the case in industrial 5G deployments.

In case the industrial edge node CUT in the production cell PRC has enough compute capacities, the user plane function UPF may alternatively deployed in the remaining computing resources of the industrial edge node CUT. With respect to a simple or lightweight industrial edge node device CUT, however, plain forwarding form the data break out interface to the user plane function as described above may be easier to realize.

In summary, the embodiments propose means to establish communication links between application end points in production cells and on user equipment associated with a wireless 5g industrial campus network or later generations of wireless networks. As a consequence, time-deterministic and/or time-sensitive quality-of service may be supported on user equipment connected by 5G systems and may be offered inside production cells. The embodiments propose placing virtualized CU and DU software components to industrial edge-cloud systems or defining an industrial radio unit or RU component that features a local data break out for production cell data traffic complying with time-deterministic and/or time-sensitive quality-of service requirements of the production cell data traffic. The embodiments provide an industry-grade solution using a Multi-Access Edge Compute or MEC paradigm. Multi-access Edge Computing (MEC) offers application developers and content providers cloud-computing capabilities and an IT service environment at the edge of the network. This environment is characterized by ultra-low latency and high bandwidth as well as real-time access to radio network information that may be leveraged by applications. The embodiments provide this MEC paradigm by:
- placing virtualized CU and DU software components to industrial edge-cloud systems according to the first embodiment as depicted in FIG. 2; or;
- by defining an industrial RU component that has a local data break out for production cell QoS data traffic according to the second embodiment as depicted in FIG. 3.

A major advantage of the disclosed embodiments is an ability of application endpoints of industrial applications IPC being associated with a cell network CNW of a production cell PRC and application endpoints on user equipment UE being situated in a production cell may rely on QoS guarantees for their mutual data exchange communication. This is achieved by scaling up a 5G system hosted in aggregation layer. A data service orchestration allows different options to achieve this: Either by leveraging compute resources in an industrial edge cloud inside the production cell or by creating a local data breakout at an extended radio unit device in the production cell

A particular advantage of the second embodiment is that the extended radio unit device in the production cell opens a possibility to create an industrial radio unit with standardized connectivity to 5G core components, radio access (RAN) components and an additional local data break out interface to the production cell according to the second embodiment. Overall, this allows the utilization of one 5G System and its operation in the aggregation layer, while supporting required QoS-mechanisms for operations of 5G user equipment UE in multiple production cells PRC.

## Claims

1. A method for operating an edge node to provide local data breakout related to a data service provided by at least one application endpoint in an industrial production cell, the industrial production cell including:
- a first application end point associated with a cell network (CNW) of the industrial production cell (PRC), the cell network (CNW) of the industrial production (PRC) cell being imposed by time-deterministic and/or time-sensitive quality-of service requirements; and;
- a second application end point associated with an aggregation layer (AGL) of an industrial campus network (INW) providing core network services assigned to the aggregation layer (AGL);
the method including the steps of:
- allocating computing resources in the industrial production cell (PRC) to form the edge node (CUT) and assigning at least one radio unit (RU) service to the edge node (CUT);
- operating a user plane function (UPF) by said core network services assigned to the aggregation layer (AGL) and/or by a core network service assigned to the edge node (CUT), the user plane function (UPF) operated for exchanging control data between at least one of said core network services assigned to the aggregation layer (AGL) and the edge node (CUT); and;
- establishing the data service between the first and the second application endpoint consistently within the cell network (CNW), the data service complying with the quality-of service requirements of the cell network (CNW).

2. A method according to claim 1, wherein allocating computing resources in the industrial production cell to form the edge node (CUT) includes the step of operating the edge node (CUT) as a device providing a wireless radio unit (RU) interface, the device additionally being equipped with an interface for the cell network (CNW).

3. A method according to one of the aforementioned claims 1 or 2, wherein the user plane function (UPF) is operated in a data plane of a centralized unit (CU) assigned to the aggregation layer (AGL) and the user plane function (UPF) is operated for exchanging control data between centralized unit (CU) assigned to the aggregation layer (AGL) and the edge node (CUT).

4. A method according to claim 1, wherein allocating computing resources in the industrial production cell to form the edge node (CUT) include the steps of:
forming an industrial edge cloud by a composite system of industrial devices, industrial applications and/or servers interconnected by the production cell network (CNW); and;
hosting software components for a distributed unit (DU) and for a data plane of a centralized unit (CU) on the industrial edge cloud.

5. A method according to one of the aforementioned claims 1 or 4, wherein the user plane function (UPF) is operated in a data plane of a centralized unit (CU) service assigned to the production cell network (CNW) and wherein the user plane function (UPF) is operated for exchanging control data between the centralized unit (CU) service assigned to the cell network (CNW) and the centralized unit CU hosted in the aggregation layer AGL.

6. A method according to one of the aforementioned claims 1, 4 and 5, wherein the user plane function (UPF) is operated in a data plane of a centralized unit (CU) assigned to the aggregation layer (AGL) and the user plane function (UPF) is operated for exchanging control data between centralized unit (CU) assigned to the aggregation layer (AGL) and the edge node (CUT).

7. An industrial edge node providing an interface for interfacing a cell network (CNW) for providing local data breakout related to a data service, the industrial edge node (CUT) including at least one processor having access to a data storage having stored thereon computer executable program code, which, when executed by the processor, causes the processor to perform a method according to one of the aforementioned claims 1 to 3.

8. An industrial edge node being formed by a plurality of software services and/or devices being communicatively connected by the cell network (CNW) for providing local data breakout related to a data service, the industrial edge node (CUT) including at least one processor having access to a data storage having stored thereon computer executable program code, which, when executed by the processor, causes the processor to perform a method according to one of the aforementioned claims 1, 4 and 5 .
